# EUROPEAN PATENT SPECIFICATION

(11) **EP 1 818 554 B1**
(45) Date of publication and mention of the grant of the patent: **10.08.2016**
(21) Application number: 07001320.6
(22) Date of filing: 22.01.2007
(51) Int. Cl.: F16C 33/10, G01M 13/00

(54) **Performance judgment method for dynamic pressure bearing and dynamic pressure bearing**
Leistungsbeurteilungsverfahren für dynamisches Drucklager und dynamisches Drucklager
Procédé de discernement de performance pour le palier de pression dynamique et palier de pression dynamique

(30) Priority: 20.01.2006 JP 2006012774
(43) Date of publication of application: 15.08.2007
(73) Proprietor: JTEKT Corporation, Osaka-shi Osaka 542-8502 (JP)
(72) Inventor: Ogimoto, Takeharu, Osaka-shi Osaka 542-8502 (JP); Onishi, Masayoshi, Osaka-shi Osaka 542-8502 (JP); Takahashi, Takeshi, Osaka-shi Osaka 542-8502 (JP); Takamura, Yasuo, Osaka-shi Osaka 542-8502 (JP); Matsue, Shinji, Osaka-shi Osaka 542-8502 (JP)
(74) Representative: Hoefer & Partner Patentanwälte mbB

(56) References cited:
- JP-A- 59 159 416
- JP-A- 2002 310 145

## Description

### BACKGROUND OF THE INVENTION

The present invention relates to a performance judgment method for a dynamic pressure bearing and a dynamic pressure bearing. In particular, the invention relates to a performance judgment method of a dynamic pressure bearing that can rapidly and accurately estimate a possibility that leakage of lubricating oil and abnormal abrasion occur in a dynamic pressure bearing, and a dynamic pressure bearing that can prevent occurrence of leakage of lubricating oil and abnormal abrasion.

As a dynamic pressure bearing, there is known a dynamic pressure bearing disclosed in JP-S59-159416.

The dynamic pressure bearing includes a sleeve and a shaft inside the sleeve. On the outer peripheral surface of the shaft, two herringbone grooves are formed so as to be separated in an axial direction. In a state where lubricating oil is filled between the sleeve and the shaft, the dynamic pressure bearing rotates the shaft or sleeve using a motor or the like. Then, an oil film pressure is generated in the herringbone groove such that the shaft is supported on the sleeve in a state where the shaft and the sleeve do not come into contact with each other.

However, generally, there is a problem in the dynamic pressure bearing not limited to the above dynamic pressure bearing that the leakage of lubricating oil or abnormal abrasion can occur in a dynamic pressure bearing due to a variation caused by an individual difference. When such a defective dynamic pressure bearing is provided in a machine, the machine may be damaged by the defective dynamic pressure bearing.

When trying to judge whether or not leakage of lubricating oil or abnormal abrasion occurs in the dynamic pressure bearing, there is no method that rapidly and accurately judges whether or not leakage of lubricating oil or abnormal abrasion is likely to occur in the dynamic pressure bearing.

### SUMMARY OF THE INVENTION

It is an object of the invention is to provide a performance judgment method for a dynamic pressure bearing that can judge whether or not leakage of lubricating oil and abnormal abrasion occur in a dynamic pressure bearing, and a dynamic pressure bearing that can prevent occurrence of leakage of lubricating oil or abnormal abrasion.

According to an aspect of the invention, there is provided a method of judging performance of a dynamic pressure bearing that includes a shaft having a shank and a flange connected to one end of the shank, and a sleeve defining a flange housing space for housing the flange and a shank housing space for housing the shank and having a receiving surface for receiving the flange and an opposite surface opposed to the receiving surface through the flange housing space, the shank housing space communicating to the flange housing space and a dynamic pressure generation groove being formed in at least one of an inner peripheral surface of the sleeve facing the shank housing space and the shank, the method comprising the steps:
measuring an axial clearance by subtracting an axial thickness of the flange from an axial dimension between the receiving surface and the opposite surface;
measuring a floating amount that corresponds to an axial clearance between the flange and the opposite surface when lubricating oil is filled between the sleeve and the shaft and the shaft or the sleeve rotates at a predetermined speed in a state where the shaft is vertically disposed such that the flange is located above the shank; and
calculating a ratio of the measured axial clearance to the measured floating amount and judging that leakage of lubricating oil and abnormal abrasion do not occur in the dynamic pressure bearing when the calculated ratio falls within the range from 0.3 to 0.55.

When the shaft is vertically disposed such that the flange is located above the shank, the relationship between the ratio and occurrence ratios of lubricating oil leakage and abnormal abrasion is examined.

When the shaft is vertically disposed such that the flange is located above the shank, and when the ratio is less than 0.3, it has been found that the number of dynamic pressure bearings having abnormal abrasion in the sleeves and the shafts rapidly increases. Further, when the ratio exceeds 0.55, it has been found that the number of dynamic pressure bearings having leakage of lubricating oil rapidly increases. Meanwhile, when the ratio ranges from 0.3 to 0.55, leakage of lubricating oil and abnormal abrasion do not occur in all dynamic pressure bearings.

According to the performance judgment method of a dynamic pressure bearing of the aspect of the invention, when the ratio ranges from 0.3 to 0.55 in a state where the shaft is vertically disposed such that the flange is located above the shank, the dynamic pressure bearing is judged as a product not having leakage of lubricating oil and abnormal abrasion. Therefore, it is possible to rapidly and accurately judge a dynamic pressure bearing not having leakage of lubricating oil and abnormal abrasion.

According to another aspect of the invention, there is provided a method of judging performance of a dynamic pressure bearing that includes a shaft having a shank and a flange connected to one end of the shank, and a sleeve defining a flange housing space for housing the flange and a shank housing space for housing the shank and having a receiving surface for receiving the flange and an opposite surface opposed to the receiving surface through the flange housing space, the shank housing space communicating to the flange housing space and a dynamic pressure generation groove being formed in at least one of an inner peripheral surface of the sleeve facing the shank housing space and the shank, the method comprising the steps:
measuring an axial clearance by subtracting an axial thickness of the flange from an axial dimension between the receiving surface and the opposite surface;
measuring a floating amount that corresponds to an axial clearance between the flange and the receiving surface when lubricating oil is filled between the sleeve and the shaft and the shaft or the sleeve rotates at a predetermined speed in a state where the shaft is vertically disposed such that the flange is located below the shank; and
calculating a ratio of the measured axial clearance to the measured floating amount and judging that leakage of lubricating oil and abnormal abrasion do not occur in the dynamic pressure bearing when the calculated ratio falls within the range from 0.45 to 0.70.

When the shaft is vertically disposed such that the flange is positioned below the shank, the relationship between the ratio and occurrence ratios of leakage of lubricating oil and abnormal abrasion is examined.

When the shaft is vertically disposed such that the flange is positioned below the shank, and when the ratio is less than 0.45, it has been found that the number of dynamic pressure bearings having leakage of lubricating oil in the sleeves and shafts thereof rapidly increases. Further, when the ratio exceeds 0.70, it has been found that the number of dynamic pressure bearings having abnormal abrasion rapidly increases. Meanwhile, when the ratio ranges from 0.45 to 0.70, leakage of lubricating oil and abnormal abrasion do not occur in all dynamic pressure bearings.

According to the performance judgment method of a dynamic pressure bearing of another aspect of the invention, when the ratio ranges from 0.45 to 0.70 in a state where the shaft is vertically disposed such that the flange is positioned below the shank, the dynamic pressure bearing is judged as a product not having leakage of lubricating oil and abnormal abrasion. Therefore, it is possible to rapidly and accurately judge a dynamic pressure bearing not having leakage of lubricating oil and abnormal abrasion.

According to still another aspect of the invention, a dynamic pressure bearing comprises:
a shaft that includes a shank and a flange connected to one end of the shank;
a sleeve that defines a flange housing space for housing the flange and a shank housing space for housing the shank and has a receiving surface for receiving the flange and an opposite surface opposed to the receiving surface through the flange housing space, the shank housing space communicating to the flange housing space; and
a dynamic pressure generation groove formed on at least one of an inner peripheral surface of the sleeve facing the shank housing space and the shank,
wherein the condition 0.3 ≤ b/a ≤ 0.55 is satisfied,
where "a" represents an axial clearance obtained by subtracting an axial thickness of the flange from an axial dimension between the receiving surface and the opposite surface, and "b" represents an axial clearance between the flange and the opposite surface in a state where lubricating oil is filled between the sleeve and the shaft, the shaft is vertically disposed such that the flange is located above the shank, and the shaft or the sleeve rotates at a predetermined speed.

According to the dynamic pressure bearing of still another aspect of the invention, since the condition 0.3 ≤ b/a ≤ 0.55 is satisfied, leakage of lubricating oil and abnormal abrasion do not occur.

According to yet still another aspect of the invention, a dynamic pressure bearing comprises:
a shaft that includes a shank and a flange connected to one end of the shank;
a sleeve that defines a flange housing space for housing the flange and a shank housing space for housing the shank and has a receiving surface for receiving the flange and an opposite surface opposed to the receiving surface through the flange housing space, the shank housing space communicating to the flange housing space; and
a dynamic pressure generation groove formed on at least one of an inner peripheral surface of the sleeve facing the shank housing space and the shank,
wherein the condition 0.45 ≤ c/a ≤ 0.70 is satisfied,
where "a" represents an axial clearance obtained by subtracting an axial thickness of the flange from an axial dimension between the receiving surface and the opposite surface, and "c" represents an axial clearance between the flange and the receiving surface in a state where lubricating oil is filled between the sleeve and the shaft, the shaft is vertically disposed such that the flange is located below the shank, and the shaft or the sleeve rotates at a predetermined speed.

According to the dynamic pressure bearing of still another aspect of the invention, since the condition 0.45 ≤ c/a ≤ 0.70 is satisfied, leakage of lubricating oil and abnormal abrasion do not occur.

According to the performance judgment method of a dynamic pressure bearing of the invention, it is possible to rapidly and accurately judge whether or not leakage of lubricating oil and abnormal abrasion is likely to occur.

According to the dynamic pressure bearing of the invention, leakage of lubricating oil and abnormal abrasion do not occur.

### BRIEF DESCRIPTION OF THE DRAWINGS

Fig. 1 is a diagram illustrating a performance judgment method of a dynamic pressure bearing according to a first embodiment of the invention.
Fig. 2 is a table showing the relationship between a ratio of a floating amount to an axial clearance and occurrence ratios of oil leakage and abnormal abrasion when a shaft is vertically disposed such that a flange is positioned above a shank.
Fig. 3 is a diagram illustrating a performance judgment method of a dynamic pressure bearing according to a second embodiment of the invention.
Fig. 4 is a table showing the relationship between a ratio of a floating amount to an axial clearance and occurrence ratios of oil leakage and abnormal abrasion when a shaft is vertically disposed such that a flange is positioned below a shank.

### DETAILED DESCRIPTION OF PREFERRED EMBODIMENTS

Hereinafter, embodiments of the invention will be described in detail with reference to the drawings.

### First Embodiment

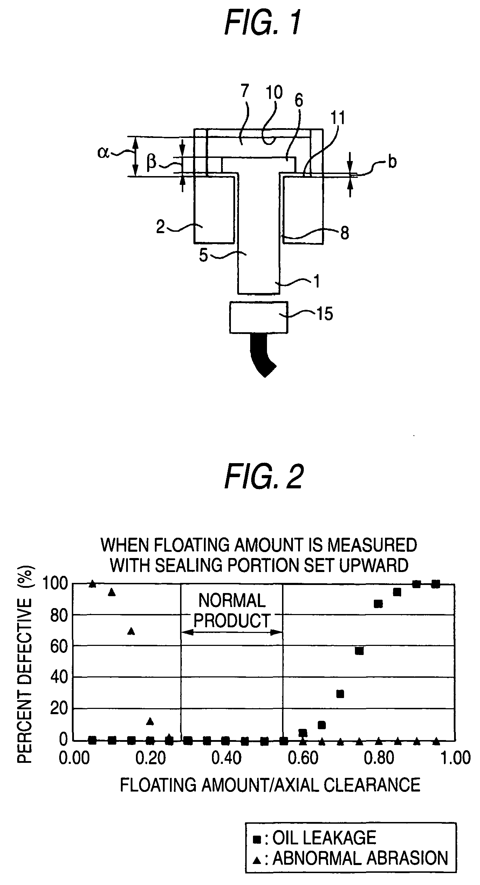

Fig. 1 is a diagram illustrating a performance judgment method of a dynamic pressure bearing according to a first embodiment of the invention. With reference to Fig. 1, the dynamic pressure bearing, performance of which is judged by the performance judgment method for a dynamic pressure bearing, and the performance judgment method of a dynamic pressure bearing according to the first embodiment will be described.

First, the dynamic pressure bearing, the performance of which is judged by the performance judgment method of a dynamic pressure bearing according to the first embodiment, will be described.

The dynamic pressure bearing, the performance of which is judged by the performance judgment method of a dynamic pressure bearing according to the first embodiment, includes a shaft 1 and a sleeve 2.

The shaft 1 has a shank 5 and a flange 6 connected to one end of the shank 5. The sleeve 2 defines (partitions) a flange housing space 7 and a shank housing space 8. The flange 6 is housed in the flange housing space 7, and the shank 5 is housed in the shank housing space 8 connected to the flange housing space 7. The sleeve 2 has a receiving surface 10 the flange and an opposite surface 11 opposed to the receiving surface through the flange housing space 7. On at least one of the shank 5 and an inner peripheral surface of the sleeve 2 facing the shank housing space 8, a herringbone-shaped dynamic pressure generation groove is formed.

Next, the performance judgment method of a dynamic pressure bearing will be described. First, an axial clearance measurement step is performed. In the axial clearance measurement step, an axial clearance a (a = α - β) is measured by subtracting an axial thickness β of the flange 6 from an axial dimension α of the flange housing space 7.

Subsequently, a floating amount measurement step is performed. In the floating amount measurement step, lubricating oil is filled between the sleeve 2 and the shaft 1, and the shaft 1 is vertically disposed such that the flange 6 is positioned above the shank 5. Further, the shaft 1 rotates by a motor or the like at a rated rotation speed (or a predetermined rotation speed). In addition, instead of the shaft 1, the sleeve 2 may rotate at a rated rotation speed (or a predetermined rotation speed). Then, a floating amount b is measured by a displacement sensor 15. The floating amount b is an axial clearance between the flange 6 and the opposite surface 11.

Finally, a performance judgment step is performed. In the performance judgment step, a ratio of the axial clearance a measured in the axial clearance measurement step to the floating amount b measured in the floating amount measurement step is calculated. When the ratio ranges from 0.3 to 0.55, the dynamic pressure bearing is judged as a normal product not having leakage of lubricating oil and abnormal abrasion. Meanwhile, when the ratio is less than 0.3 or more than 0.55, the dynamic pressure bearing is judged as a defective product having leakage of lubricating oil or abnormal abrasion.

Table 1 shows the relationship between the ratio (b/a) and occurrence ratios of leakage of lubricating oil and abnormal abrasion when the shaft 1 is vertically disposed such that the flange 6 is positioned above the shank 5.

As a dynamic pressure bearing, the above-described dynamic pressure bearing is used. Further, an experiment is performed in a state where lubricating oil is filled between the sleeve 2 and the shaft 1, and the shaft 1 rotates at a rated rotation speed (a predetermined rotation speed).

**Table 1**

| Floating Amount / Axial Clearance | Oil Leakage | Abnormal Abrasion |
|---|---|---|
| 0.05 | 0 | 100 |
| 0.10 | 0 | 95 |
| 0.15 | 0 | 71 |
| 0.20 | 0 | 13 |
| 0.25 | 0 | 2 |
| 0.30 | 0 | 0 |
| 0.35 | 0 | 0 |
| 0.40 | 0 | 0 |
| 0.45 | 0 | 0 |
| 0.50 | 0 | 0 |
| 0.55 | 0 | 0 |
| 0.60 | 5 | 0 |
| 0.65 | 11 | 0 |
| 0.70 | 30 | 0 |
| 0.75 | 57 | 0 |
| 0.80 | 88 | 0 |
| 0.85 | 95 | 0 |
| 0.90 | 100 | 0 |
| 0.95 | 100 | 0 |

Fig. 2 is a diagram showing Table 1. In Fig. 2, the horizontal axis indicates the ratio (b/a) of the floating amount to the axial clearance, and the vertical axis indicates the ratio of the sample number of dynamic pressure bearings to the number of defective products with respect to each ratio of the floating amount to the axial clearance. Further, in Fig. 2, ▲ indicates a ratio of the total number of samples to the number of samples having leakage of lubricating oil, and ■ indicates a ratio of the total number of samples to the number of samples having abnormal abrasion.

As shown in Table 1 and Fig. 2, when the ratio (b/a) of the floating amount to the axial clearance is equal to or less than 0.25 in a state where the shaft 1 is vertically disposed such that the flange 6 is positioned above the shank 5 (when the floating amount is measured with a sealing portion set upward), samples having abnormal abrasion are generated.

Specifically, as the ratio (b/a) of the floating amount to the axial clearance decreases from 0.25, a ratio of abnormal abrasion rapidly increases. Further, as the ratio (b/a) of the floating amount to the axial clearance approaches 0.05, abnormal abrasion occurs in all samples.

As shown in Table 1 and Fig. 2, when the ratio (b/a) of the floating amount to the axial clearance is equal to or more than 0.60 in a state where the shaft 1 is vertically disposed such that the flange 6 is positioned above the shank 5 (when the floating amount is measured with the sealing portion set upward), samples having leakage of lubricating oil are generated.

Specifically, as the ratio (b/a) of the floating amount to the axial clearance increases from 0.60, a ratio of oil leakage rapidly increases. Further, as the ratio (b/a) of the floating amount to the axial clearance approaches 0.90, leakage of lubricating oil occurs in all samples.

As shown in Table 1 and Fig. 2, when the ratio (b/a) of the floating amount to the axial clearance ranges from 0.30 to 0.55 in a state where the shaft 1 is vertically disposed such that the flange 6 is positioned above the shank 5 (when the floating amount is measured with the sealing portion set upward), leakage of lubricating oil and abnormal abrasion do not occur in all samples.

Therefore, when the ratio of the floating amount to the axial clearance ranges from 0.30 to 0.55, the dynamic pressure bearing can be judged as a product not having leakage of lubricating oil and abnormal abrasion.

In the performance judgment method of a dynamic' pressure bearing according to the first embodiment, when the ratio (b/a) ranges from 0.30 to 0.55 in a state where the shaft 1 is vertically disposed such that the flange 6 is positioned above the shank 5, the dynamic pressure bearing is judged as a product not having leakage of lubricating oil and abnormal abrasion. Therefore, it is possible to rapidly and accurately judge a dynamic pressure bearing not having leakage of lubricating oil and abnormal abrasion.

### Second Embodiment

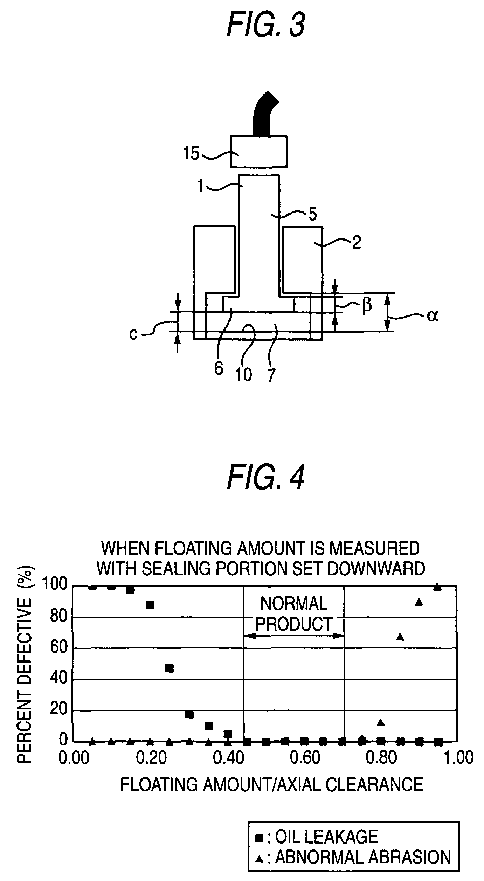

Fig. 3 is a diagram illustrating a performance judgment method of a dynamic pressure bearing according to a second embodiment of the invention.

A dynamic pressure bearing, the performance of which is judged by the performance judgment method of a dynamic pressure bearing according to the second embodiment, has the same structure as the dynamic pressure bearing, the performance of which is judged by the performance judgment method of a dynamic pressure bearing according to the first embodiment.

Hereinafter, the performance judgment method of a dynamic pressure bearing according to the second embodiment will be described with reference to Fig. 3.

First, an axial clearance measurement step is performed. In the axial clearance measurement step, an axial clearance a (a = α - β) is measured by subtracting an axial thickness P of the flange 6 from an axial dimension α of the flange housing space 7.

Subsequently, a floating amount measurement step is performed. In the floating amount measurement step, lubricating oil is filled between the sleeve 2 and the shaft 1, and the shaft 1 is vertically disposed such that the flange 6 is positioned below the shank 5. Further, the shaft 1 rotates by a motor or the like at a rated rotation speed (or a predetermined rotation speed). In addition, instead of the shaft 1, the sleeve 2 may rotate at a rated rotation speed (or a predetermined rotation speed). Then, a floating amount c is measured by a displacement sensor 15. The floating amount c is an axial clearance between the flange 6 and a receiving surface 10 of the flange 6 in the sleeve 2 with the flange housing space 7 interposed therebetween.

Finally, a performance judgment step is performed. In the performance judgment step, a ratio (c/a) of the axial clearance a measured in the axial clearance measurement process to the floating amount c measured in the floating amount measurement process is calculated. When the ratio (c/a) ranges from 0.45 to 0.70, the dynamic pressure bearing is judged as a normal product not having leakage of lubricating oil and abnormal abrasion. Meanwhile, when the ratio is less than 0.45 or more than 0.70, the dynamic pressure bearing is judged as a defective product having leakage of lubricating oil and abnormal abrasion.

Table 2 shows the relationship between the ratio (c/a) and occurrence ratios of leakage of lubricating oil and abnormal abrasion when the shaft 1 is vertically disposed such that the flange 6 is positioned below the shank 5.

As a dynamic pressure bearing, the dynamic pressure bearing, the structure of which has been described in the first embodiment, is used. Further, an experiment is performed in a state where lubricating oil is filled between the sleeve 2 and the shaft 1, and the shaft 1 rotates at a rated rotation speed (a predetermined rotation speed).

**Table 2**

| Floating Amount / Axial Clearance | Oil Leakage | Abnormal Abrasion |
|---|---|---|
| 0.05 | 100 | 0 |
| 0.10 | 100 | 0 |
| 0.15 | 9B | 0 |
| 0.20 | 87 | 0 |
| 0.25 | 47 | 0 |
| 0.30 | 18 | 0 |
| 0.35 | 9 | 0 |
| 0.40 | 3 | 0 |
| 0.45 | 0 | 0 |
| 0.50 | 0 | 0 |
| 0.55 | 0 | 0 |
| 0.60 | 0 | 0 |
| 0.65 | 0 | 0 |
| 0.70 | 0 | 0 |
| 0.75 | 0 | 3 |
| 0.80 | 0 | 15 |
| 0.85 | 0 | 67 |
| 0.90 | 0 | 91 |
| 0.95 | 0 | 100 |

Fig. 4 is a diagram showing Table 2. In Fig. 4, the horizontal axis indicates the ratio (c/a) of the floating amount to the axial clearance, and the vertical axis indicates the ratio of the total number of samples of the dynamic pressure bearing to the number of defective samples with respect to each ratio of the floating amount to the axial clearance. Further, in Fig. 4, ▲ indicates a ratio of the total number of samples to the number of samples having leakage of lubricating oil, and ■ indicates a ratio of the total number of samples to the number of samples having abnormal abrasion.

As shown in Table 2 and Fig. 4, when the ratio (c/a) of the floating amount to the axial clearance is equal to or less than 0.40 in a state where the shaft 1 is vertically disposed such that the flange 6 is positioned below the shank 5 (when the floating amount is measured with a sealing portion set downward), samples having abnormal abrasion are generated.

Specifically, as the ratio (c/a) of the floating amount to the axial clearance decreases from 0.40, the ratio of oil leakage rapidly increases. Further, as the ratio (c/a) of the floating amount to the axial clearance approaches 0.10, leakage of lubricating oil occurs in all samples.

As shown in Table 2 and Fig. 4, when the ratio (c/a) of the floating amount to the axial clearance is equal to or more than 0.75 in a state where the shaft 1 is vertically disposed such that the flange 6 is positioned below the shank 5 (when the floating amount is measured with the sealing portion set downward), samples having abnormal abrasion are generated.

Specifically, as the ratio (c/a) of the floating amount to the axial clearance increases from 0.75, the ratio of abnormal abrasion rapidly increases. Further, as the ratio (c/a) of the floating amount to the axial clearance approaches 0.95, abnormal abrasion occurs in all samples.

As shown in Table 2 and Fig. 4, when the ratio (c/a) of the floating amount to the axial clearance ranges from 0.45 to 0.70 in a state where the shaft 1 is vertically disposed such that the flange 6 is positioned below the shank 5 (when the floating amount is measured with the sealing portion set downward), leakage of lubricating oil and abnormal abrasion do not occur in all samples.

Therefore, when the ratio (c/a) of the floating amount to the axial clearance ranges from 0.45 to 0.70, the dynamic pressure bearing can be judged as a product not having leakage of lubricating oil and abnormal abrasion.

In the performance judgment method of a dynamic pressure bearing according to the second embodiment, when the ratio (c/a) ranges from 0.45 to 0.70 in a state where the shaft 1 is vertically disposed such that the flange 6 is positioned below the shank 5, the dynamic pressure bearing is judged as a product not having leakage of lubricating oil and abnormal abrasion. Therefore, it is possible to rapidly and accurately judge a dynamic pressure bearing not having leakage of lubricating oil and abnormal abrasion.

The performance judgment method of the invention depends on the axial clearance a and the floating amount b or the axial clearance a and the floating amount c, but does not depend on the shape and the size of the dynamic pressure generation groove. That is, the dynamic pressure generation groove formed in the dynamic pressure bearing may have various shapes. For example, herringbone-shaped dynamic pressure generation grooves may be formed across the entire peripheral surface in a peripheral direction and at two places of the shank separated from each other in the axial direction. Alternately, herringbone-shaped dynamic pressure generation grooves may be formed across the entire peripheral surface in the peripheral direction and at three places of the inner peripheral surface of the sleeve separated from each other in the axial direction.

In the first and second embodiments, the dynamic pressure generation groove is not formed in the end surface of the flange 6 and the receiving surface 10 and the receiving surface 10 of the sleeve 2. However, the dynamic pressure generation groove, such as a herringbone-shape dynamic pressure generation groove, may be formed in at least one of the end surface of the flange close to the receiving surface and the receiving surface of the sleeve facing the end surface. In this case, when a, b, and c are also measured, as described above, and the condition 0.3 ≤ b/a ≤ 0.55 or 0.45 ≤ c/a ≤ 0.70 is satisfied, it can be found that leakage of lubricating oil and abnormal abrasion do not occur in the dynamic pressure bearing.

## Claims

1. A method of judging performance of a dynamic pressure bearing that includes a shaft (1) having a shank (5) and a flange (6) connected to one end of the shank (5), and a sleeve (2) defining a flange housing space (7) for housing the flange (6) and a shank housing space (8) for housing the shank (5) and having a receiving surface (10) for receiving the flange (6) and an opposite surface (11) opposed to the receiving surface (10) through the flange housing space (7), the shank housing space (8) communicating to the flange housing space (7) and a dynamic pressure generation groove being formed in at least one of an inner peripheral surface of the sleeve (2) facing the shank housing space (8) and the shank (5), the method comprising the steps:
measuring an axial clearance by subtracting an axial thickness (β) of the flange (6) from an axial dimension (α) between the receiving surface (10) and the opposite surface (11);
measuring a floating amount (b) that corresponds to an axial clearance between the flange (6) and the opposite surface (11) when lubricating oil is filled between the sleeve (2) and the shaft (1) and the shaft (1) or the sleeve (2) rotates at a predetermined speed in a state where the shaft (1) is vertically disposed such that the flange (6) is located above the shank (5); and
calculating a ratio of the measured axial clearance to the measured floating amount (b) and judging that leakage of lubricating oil and abnormal abrasion do not occur in the dynamic pressure bearing when the calculated ratio falls within the range from 0.3 to 0.55.

2. A method of judging performance of a dynamic pressure bearing that includes a shaft (1) having a shank (5) and a flange (6) connected to one end of the shank (5), and a sleeve (2) defining a flange housing space (7) for housing the flange (6) and a shank housing space (8) for housing the shank (5) and having a receiving surface (10) for receiving the flange (6) and an opposite surface (11) opposed to the receiving surface (10) through the flange housing space (7), the shank housing space (8) communicating to the flange housing space (7) and a dynamic pressure generation groove being formed in at least one of an inner peripheral surface of the sleeve (2) facing the shank housing space (8) and the shank (5), the method comprising the steps:
measuring an axial clearance by subtracting an axial thickness (β) of the flange (6) from an axial dimension (α) between the receiving surface (10) and the opposite surface (11);
measuring a floating amount (c) that corresponds to an axial clearance between the flange (6) and the receiving surface (10) when lubricating oil is filled between the sleeve (2) and the shaft (1) and the shaft (1) or the sleeve (2) rotate at a predetermined speed in a state where the shaft (1) is vertically disposed such that the flange (6) is located below the shank (5); and
calculating a ratio of the measured axial clearance to the measured floating amount (c) and judging that leakage of lubricating oil and abnormal abrasion do not occur in the dynamic pressure bearing when the calculated ratio falls within the range from 0.45 to 0.70.

3. A dynamic pressure bearing comprising:
a shaft (1) that includes a shank (5) and a flange (6) connected to one end of the shank;
a sleeve (2) that defines a flange housing space (7) for housing the flange (6) and a shank housing space (8) for housing the shank (5) and has a receiving surface (10) for receiving the flange (6) and an opposite surface (11) opposed to the receiving surface (10) through the flange housing space (7), the shank housing space (8) communicating to the flange housing space (7); and
a dynamic pressure generation groove formed on at least one of an inner peripheral surface of the sleeve (2) facing the shank housing space (8) and the shank (5),
wherein the condition 0.3 ≤ b/a ≤ 0.55 is satisfied,
where "a" represents an axial clearance obtained by subtracting an axial thickness of the flange (6) from an axial dimension between the receiving surface (10) and the opposite surface (11), and "b" represents an axial clearance between the flange (6) and the opposite surface (11) in a state where lubricating oil is filled between the sleeve (2) and the shaft (1), the shaft (1) is vertically disposed such that the flange (6) is located above the shank (5), and the shaft (1) or the sleeve (2) rotates at a predetermined speed.

4. A dynamic pressure bearing comprising:
a shaft (1) that includes a shank (5) and a flange (6) connected to one end of the shank (5);
a sleeve (2) that defines a flange housing space (7) for housing the flange (6) and a shank housing space (8) for housing the shank (5) and has a receiving surface (10) for receiving the flange (6) and an opposite surface (11) opposed to the receiving surface (10) through the flange housing space (7), the shank housing space (8) communicating to the flange housing space (7); and
a dynamic pressure generation groove formed on at least one of an inner peripheral surface of the sleeve (2) facing the shank housing space (8) and the shank (5),
wherein the condition 0.45 ≤ c/a ≤ 0.70 is satisfied,
where "a" represents an axial clearance obtained by subtracting an axial thickness of the flange (6) from an axial dimension between the receiving surface (10) and the opposite surface (11), and "c" represents an axial clearance between the flange (6) and the receiving surface (11) in a state where lubricating oil is filled between the sleeve (2) and the shaft (1), the shaft (1) is vertically disposed such that the flange (6) is located below the shank (5), and the shaft (1) or the sleeve (2) rotates at a predetermined speed.

## Patentansprüche

1. Verfahren zur Leistungsbeurteilung eines dynamischen Drucklagers, das eine Welle (1) mit einem Schaft (5) und einem Flansch (6), der mit einem Ende des Schafts (5) verbunden ist, und eine Hülse (2) umfasst, die einen Flanschaufnahmeraum (7) zum Aufnehmen des Flansches (6) und einen Schaftaufnahmeraum (8) zum Aufnehmen des Schafts (5) bildet und eine Aufnahmefläche (10) zum Aufnehmen des Flansches (6) und eine gegenüberliegende Fläche (11), die der Aufnahmefläche (10) gegenüberliegt, durch den Flanschaufnahmeraum (7) aufweist, wobei der Schaftaufnahmeraum (8) mit dem Flanschaufnahmeraum (7) in Verbindung steht, und eine dynamische Druckerzeugungsnut in zumindest einer inneren Umfangsfläche der Hülse (2), die dem Schaftaufnahmeraum (8) zugewandt ist, oder im Schaft (8) ausgebildet ist, wobei das Verfahren die Schritte aufweist:
- Messen eines axialen Abstandes durch Subtrahieren einer axialen Dicke (β) des Flansches (6) von einer axialen Größe (α) zwischen der Aufnahmefläche (10) und der gegenüberliegenden Fläche (11);
- Messen eines Floating-Betrags (b), der einem axialen Abstand zwischen dem Flansch (6) und der gegenüberliegenden Fläche (11) entspricht, wenn Schmieröl zwischen die Hülse (2) und die Welle (1) eingefüllt ist und die Welle (1) oder die Hülse (2) sich bei einer vorbestimmten Drehzahl in einem Zustand drehen, in dem die Welle (1) vertikal angeordnet ist, so dass der Flansch (6) oberhalb des Schafts (5) angeordnet ist; und
- Berechnen eines Verhältnisses des gemessenen axialen Abstands zum gemessenen Floating-Betrag (b) und Beurteilen, dass eine Leckage vom Schmieröl und ein anormaler Verschleiß nicht im dynamischen Drucklager auftreten, wenn das berechnete Verhältnis innerhalb des Bereichs von 0,3 bis 0,55 fällt.

2. Verfahren zur Leistungsbeurteilung eines dynamischen Drucklagers, das eine Welle (1) mit einem Schaft (5) und einem Flansch (6), der mit einem Ende des Schafts (5) verbunden ist, und eine Hülse (2) umfasst, die einen Flanschaufnahmeraum (7) zum Aufnehmen des Flansches (6) und einen Schaftaufnahmeraum (8) zum Aufnehmen des Schafts (5) bildet, und eine Aufnahmefläche (10) zum Aufnehmen des Flansches und eine gegenüberliegende Fläche (11), die der Aufnahmefläche (10) gegenüberliegt, durch den Flanschaufnahmeraum (7) aufweist, wobei der Schaftaufnahmeraum (8) mit dem Flanschaufnahmeraum (7) in Verbindung steht und eine dynamische Druckerzeugungsnut in zumindest einer inneren Umfangsfläche der Hülse (2), die dem Schaftaufnahmeraum (8) zugewandt ist, oder im Schaft (5) ausgebildet ist, wobei das Verfahren die Schritte aufweist:
- Messen eines axialen Abstandes durch Subtrahieren einer axialen Dicke (β) des Flansches (6) von einer axialen Größe (α) zwischen der Aufnahmefläche (10) und der gegenüberliegenden Fläche (11);
- Messen eines Floating-Betrags (b), der einen axialen Abstand zwischen dem Flansch (6) und der Aufnahmefläche (10) entspricht, wenn Schmieröl zwischen die Hülse (2) und der Welle (1) eingefüllt ist und die Welle (1) oder die Hülse (2) sich bei einer vorbestimmten Drehzahl in einem Zustand drehen, in dem die Welle (1) vertikal angeordnet ist, so dass der Flansch (6) unterhalb des Schafts (5) angeordnet ist; und
- Berechnen eines Verhältnisses des gemessenen axialen Abstands zum gemessenen Floating-Betrag (c) und Beurteilen, dass eine Leckage vom Schmieröl und ein anormaler Verschleiß nicht im dynamischen Drucklager auftreten, wenn das berechnete Verhältnis innerhalb des Bereichs von 0,45 bis 0,70 fällt.

3. Dynamisches Drucklager, aufweisend:
- eine Welle (1), die einen Schaft (5) und einen Flansch (6), der mit einem Ende des Schafts (5) verbunden ist, umfasst;
- eine Hülse (2), die einen Flanschaufnahmeraum (7) zum Aufnehmen des Flansches (6) und einen Schaftaufnahmeraum (8) zum Aufnehmen des Schafts (5) bildet und eine Aufnahmefläche (10) zum Aufnehmen des Flansches (6) und einer gegenüberliegenden Fläche (11), die der Aufnahmefläche (10) gegenüberliegt, durch den Flanschaufnahmeraum (7) aufweist, wobei der Schaftaufnahmeraum (8) mit dem Flanschaufnahmeraum (7) in Verbindung steht; und
- eine dynamische Druckerzeugungsnut, die zumindest auf einer inneren Umfangsfläche der Hülse (2), die dem Schaftaufnahmeraum (8) zugewandt ist, oder dem Schaft (5) ausgebildet ist,
- wobei die Bedingung 0,3 ≤ b/a ≤ 0,55 erfüllt ist,
- wobei "a" einen axialen Abstand darstellt, der durch Subtrahieren einer axialen Dicke des Flansches (6) von einer axialen Größe zwischen der Aufnahmefläche (10) und der gegenüberliegenden Fläche (11) erhalten wird, und "b" einen axialen Abstand zwischen dem Flansch (6) und der gegenüberliegenden Fläche (11) in einem Zustand darstellt, in dem Schmieröl zwischen der Hülse (2) und der Welle (1) eingefüllt ist, wobei die Welle (1) vertikal angeordnet ist, so dass der Flansch (6) oberhalb des Schafts (5) angeordnet ist, und sich die Welle (1) oder die Hülse (2) mit einer vorbestimmten Drehzahl drehen.

4. Dynamisches Drucklager, aufweisend:
- eine Welle (1), die einen Schaft (5) und einen Flansch (6), der mit einem Ende des Schafts (5) verbunden ist, umfasst;
- eine Hülse (2), die einen Flanschaufnahmeraum (7) zum Aufnehmen des Flansches (6) und einen Schaftaufnahmeraum (8) zum Aufnehmen des Schafts (5) bildet und eine Aufnahmefläche (10) zum Aufnehmen des Flansches (6) und eine gegenüberliegende Fläche (11), die der Aufnahmefläche (10) gegenüberliegt, durch den Flanschaufnahmeraum (7) aufweist, wobei der Schaftaufnahmeraum (8) mit dem Flanschaufnahmeraum (7) in Verbindung steht; und
- eine dynamische Druckerzeugungsnut, die zumindest auf einer inneren Umfangsfläche der Hülse (2), die dem Schaftaufnahmeraum (8) zugewandt ist, oder dem Schaft (5) ausgebildet ist,
- wobei die Bedingung 0,45 ≤ c/a ≤ 0,7 erfüllt ist,
- wobei "a" einen axialen Abstand darstellt, der durch Subtrahieren einer axialen Dicke des Flansches (6) von einer axialen Größe zwischen der Aufnahmefläche (10) und der gegenüberliegenden Fläche (11) erhalten wird, und "c" einen axialen Abstand zwischen dem Flansch (6) und der Aufnahmefläche (11) in einem Zustand darstellt, in dem Schmieröl zwischen die Hülse (2) und die Welle (1) eingefüllt ist, wobei die Welle (1) vertikal angeordnet ist, so dass der Flansch (6) unterhalb des Schafts (5) angeordnet ist, und sich die Welle (1) oder die Hülse (2) mit einer vorbestimmten Drehzahl drehen.

## Revendications

1. Procédé d'évaluation de la performance d'un palier à pression dynamique qui comporte un arbre (1) ayant une tige (5) et une bride (6) reliée à une extrémité de la tige (5), et un manchon (2) définissant un espace de logement de bride (7) pour loger la bride (6) et un espace de logement de tige (8) pour loger la tige (5) et ayant une surface de réception (10) pour recevoir la bride (6) et une surface opposée (11) qui est opposée à la surface de réception (10) à travers l'espace de logement de bride (7), l'espace de logement de tige (8) communiquant avec l'espace de logement de bride (7) et une rainure de génération de pression dynamique étant formée dans au moins l'une d'une surface périphérique intérieure du manchon (2) faisant face à l'espace de logement de tige (8) et à la tige (5), le procédé comprenant les étapes qui consistent :
à mesurer un jeu axial en soustrayant une épaisseur axiale (β) de la bride (6) d'une dimension axiale (α) entre la surface de réception (10) et la surface opposée (11) ;
à mesurer une quantité flottante (b) qui correspond à un jeu axial entre la bride (6) et la surface opposée (11) lorsqu'une huile de lubrification est introduite entre le manchon (2) et l'arbre (1) et l'arbre (1) ou le manchon (2) tourne à une vitesse prédéterminée dans un état où l'arbre (1) est disposé verticalement de sorte que la bride (6) soit située au-dessus de la tige ; et
à calculer un rapport du jeu axial mesuré sur la quantité flottante mesurée (b) et à évaluer qu'une fuite d'huile de lubrification et qu'une abrasion anormale ne se produisent pas dans le palier à pression dynamique lorsque le rapport calculé se trouve dans la plage allant de 0,3 à 0,55.

2. Procédé d'évaluation de la performance d'un palier à pression dynamique qui comporte un arbre (1) ayant une tige (5) et une bride (6) reliée à une extrémité de la tige, et un manchon (2) définissant un espace de logement de bride (7) pour loger la bride (6) et un espace de logement de tige (8) pour loger la tige (5) et ayant une surface de réception (10) pour recevoir la bride (6) et une surface opposée (11) qui est opposée à la surface de réception (10) à travers l'espace de logement de bride (7), l'espace de logement de tige (8) communiquant avec l'espace de logement de bride (7) et une rainure de génération de pression dynamique étant formée dans au moins l'une d'une surface périphérique intérieure du manchon (2) faisant face à l'espace de logement de tige (8) et à la tige (5), le procédé comprenant les étapes qui consistent :
à mesurer un jeu axial en soustrayant une épaisseur axiale (β) de la bride (6) d'une dimension axiale (α) entre la surface de réception (10) et la surface opposée (11) ;
à mesurer une quantité flottante (c) qui correspond à un jeu axial entre la bride (6) et la surface de réception (10) lorsqu'une huile de lubrification est introduite entre le manchon (2) et l'arbre (1) et l'arbre (1) ou le manchon (2) tourne à une vitesse prédéterminée dans un état où l'arbre (1) est disposé verticalement de sorte que la bride (6) soit située en dessous de la tige (5) ; et
à calculer un rapport du jeu axial mesuré sur la quantité flottante mesurée (c) et à évaluer qu'une fuite d'huile de lubrification et qu'une abrasion anormale ne se produisent pas dans le palier à pression dynamique lorsque le rapport calculé se trouve dans la plage allant de 0,45 à 0,70.

3. Palier à pression dynamique comprenant :
un arbre (1) qui comporte une tige (5) et une bride (6) reliée à une extrémité de la tige (5) ;
un manchon (2) qui définit un espace de logement de bride (7) pour loger la bride (6) et un espace de logement de tige (8) pour loger la tige (5) et présente une surface de réception (10) pour recevoir la bride (6) et une surface opposée (11) qui est opposée à la surface de réception (10) à travers l'espace de logement de bride (7), l'espace de logement de tige (8) communiquant avec l'espace de logement de bride (7) ; et
une rainure de génération de pression dynamique formée sur au moins l'une d'une surface périphérique intérieure du manchon (2) faisant face à l'espace de logement de tige (8) et de la tige (5),
dans lequel la condition 0,3 ≤ b/a ≤ 0,55 est satisfaite,
où « a » représente un jeu axial obtenu en soustrayant une épaisseur axiale de la bride (6) d'une dimension axiale entre la surface de réception (10) et la surface opposée (11), et « b » représente un jeu axial entre la bride (6) et la surface opposée (11) dans un état où une huile de lubrification est introduite entre le manchon (2) et l'arbre (1), l'arbre (1) est disposé verticalement de sorte que la bride (6) soit située au-dessus de la tige (5), et l'arbre (1) ou le manchon (2) tourne à une vitesse prédéterminée.

4. Palier à pression dynamique comprenant :
un arbre (1) qui comporte une tige (5) et une bride (6) reliée à une extrémité de la tige (5) ;
un manchon (2) qui définit un espace de logement de bride (7) pour loger la bride (6) et un espace de logement de tige (8) pour loger la tige (5) et présente une surface de réception (10) pour recevoir la bride (6) et une surface opposée (11) qui est opposée à la surface de réception (10) à travers l'espace de logement de bride (7), l'espace de logement de tige (8) communiquant avec l'espace de logement de bride (7) ; et
une rainure de génération de pression dynamique formée sur au moins l'une d'une surface périphérique intérieure du manchon (2) faisant face à l'espace de logement de tige (8) et de la tige (5),
dans lequel la condition 0,45 ≤ c/a ≤ 0,70 est satisfaite,
où « a » représente un jeu axial obtenu en soustrayant une épaisseur axiale de la bride (6) d'une dimension axiale entre la surface de réception (10) et la surface opposée (11), et « c » représente un jeu axial entre la bride (6) et la surface de réception (11) dans un état où une huile de lubrification est introduite entre le manchon (2) et l'arbre (1), l'arbre (1) est disposé verticalement de sorte que la bride (6) soit située en dessous de la tige (5), et l'arbre (1) ou le manchon (2) tourne à une vitesse prédéterminée.
